# EUROPÄISCHE PATENTANMELDUNG

(11) **EP 2 842 403 A1**
(43) Veröffentlichungstag der Anmeldung: **04.03.2015**
(21) Anmeldenummer: 14450038.6
(22) Anmeldetag: 24.07.2014
(51) Int. Cl.: A01B 15/04, A01B 15/08

(54) **Pflugkörper bzw. Pflug**

(30) Priorität: 29.08.2013 AT 6712013
(71) Anmelder: Vogel & Noot Landmaschinen GmbH & Co KG, 8661 Wartberg (AT)
(72) Erfinder: Huber, Franz Ferd., 8430 Leibnitz (AT)
(74) Vertreter: Beer & Partner Patentanwälte KG

(57) **Zusammenfassung**

Pflugkörper mit einer Pflugschar (1) und mit einem an diese anschließenden Streichblech (2), über welches der von der Pflugschar (1) angehobene Erdbal-ken bewegt wird. Dabei ist bzw. sind das Streichblech (2) und bzw. oder die Pflugschar (1) mit mindestens einer Durchbrechung (9) ausgebildet, in welcher sich eine einzige, gegebenenfalls mehrteilige Walze (10) befindet, deren Drehachse sich unter dem Streichblech (2) bzw. unter der Pflugschar (1) befindet und welche quer zur Bewegung des Erdbalkens ausgerichtet ist, wobei die Walze (10) die Oberfläche des Streichblechs (2) bzw. der Pflugschar (1) überragt.

## Beschreibung

Die gegenständliche Erfindung betrifft einen Pflugkörper mit einer Pflugschar und einem an diese anschließenden Streichblech, über welches der von der Pflugschar ausgehobene Erdbalken bewegt wird. Die gegenständliche Erfindung betrifft weiters einen Pflug, welcher mit einem erfindungsgemäßen Pflugkörper ausgebildet ist.

Ein Pflugkörper stellt einen der Bestandteile eines Pfluges dar. Pflüge gelten als eines der wichtigsten Bodenbearbeitungsgeräte in der Landwirtschaft. Sie wurden ständig weiterentwickelt und verbessert und sind in verschiedensten Varianten verfügbar.

Prinzipiell sind sämtlichen Pflügen einige Bauteile gemeinsam, nämlich die Pflugschar, welche derjenige Bauteil ist, welcher einen Erdbalken von dem umzupflügenden Feld oder der Wiese aushebt, sowie das Streichblech, welches ein räumlich gekrümmter, an die Pflugschar anschließender Bauteil ist, welcher den Erdbalken wendet und krümelt.

Um den durch einen Erdbalken erzeugten Druck aufzunehmen, weisen Pflüge zudem eine sogenannte Anlage bzw. Pfluganlage auf, welche an der der Schneide der Pflugschar abgewandten Seite einer Furche abgestützt wird. Weitere Bauteile von Pflügen dienen dazu, den Erdbalken besser zu zerkrümeln bzw. sein Zurückfallen zu verhindern, wie z.B. eine Streichschiene, weiters Streben, welche die nötige Stabilität der Pflugkörper bewirken, und Bauteile, wie beispielsweise ein Vorschäler, welcher die oberste Schicht eines umzupflügenden Felds auflockert und die bewachsene Oberfläche aufreißt bzw. auflockert.

Beim Einsatz von Pflügen ist in Abhängigkeit von der Bodenbeschaffenheit, d.h. der Trockenheit des Bodens, der Schwere des Bodens, dem Anteil an Schluff, Lehm, Sand, Steinen u.dgl., ein unterschiedlich hoher Kraftaufwand erforderlich, um ein Feld gleichmäßig tief zu durchpflügen. Dieser Kraftauf-wand ist wesentlich von den großen Reibungskräften, welche für das Einschneiden der Pflugschar in den Boden, das Ausheben des Erdbalkens und das Wenden desselben, ebenso wie das Abstützen des durch den Erdbalken erzeugten Drucks erforderlich sind, sowie insbesondere von den Reibungskräften, welche während des Durchziehens eines Pflugs auftreten, abhängig.

Es wurden in der Vergangenheit Versuche unternommen, diesen Kraftaufwand zu minimieren. So wurden beispielsweise Streichbleche mit besonderen Beschichtungen versehen, welche die hohen Reib- und Scherkräfte vermindern sollen, wobei unter anderem beispielsweise Keramikbeschichtungen zu nennen sind. Durch derartige Beschichtungen sollte nicht nur der hohe Energieaufwand, der durch die Erdbewegung verursacht wird, herabgesetzt werden, sondern es sollte auch die Standzeit der Streichbleche verlängert werden. In der Praxis haben sich derartige Beschichtungen jedoch nicht als den Erfordernissen entsprechend erwiesen.

Weitere Versuche, den Zugkraftaufwand und somit den Energieaufwand für die Erdbewegungsarbeit herabzusetzen, bestanden darin, einen sogenannten Rollenpflug zu entwickeln, bei welchem ein Teil des Streichblechs durch einzelne Rollen ersetzt wurde. Diese Rollen bedingten jedoch den Nachteil, dass sich zwischen den Rollen nicht unbeträchtliche Mengen an Erde oder auch Steinen verklemmten, wodurch einerseits die Drehbewegung der Rollen erschwert wurde und andererseits durch ein Verlegen der Spalte zwischen den Rollen deren Funktionsfähigkeit behindert wurde, sodass der Energieaufwand derartiger Pflüge nahezu gleich groß wie bei herkömmlichen Pflügen war und auch der Verschleiß der am Erdboden schleifenden Bauteile des Pflugs nicht bzw. nur geringfügig vermindert werden konnte.

Weitere Versuche, den Energieaufwand beim Pflügen und insbesondere den Energieaufwand, welcher bei einem Streichblech für das Wenden des Erdbalkens erforderlich ist, zu minimieren, bestanden darin, das Streichblech in einzelne, voneinander getrennte, gewölbte Flächen zu unterteilen, wodurch der größte Teil des Energieaufwands, welcher durch das Streichblech verursacht wurde, minimiert werden sollte. Auch derartige Streichbleche konnten sich in der Praxis nicht durchsetzen, da einerseits die Herstellung des Streichblechs viel zu aufwendig war und andererseits die Energieeinsparung gegenüber herkömmlichen Pflügen sehr gering war.

Der gegenständlichen Erfindung liegt die Aufgabe zugrunde, einen Pflugkörper bzw. einen Pflug zu schaffen, durch welchen unabhängig von der Bodenbeschaffenheit, wie dem Feuchtigkeitsgehalt des Bodens u.dgl., die Reib- und Scherkräfte minimiert werden, wodurch eine wesentliche Energieeinsparung und dadurch eine Verminderung des Schadstoffausstoßes des zum Pflügen verwendeten Traktors bzw. Schleppers gegenüber herkömmlichen Pflugkörpern bzw. Pflügen erzielt wird.
Diese Aufgabe wird erfindungsgemäß dadurch gelöst, dass das Streichblech und bzw. oder die Pflugschar mit mindestens einer Durchbrechung ausgebildet sind bzw. ist, in welcher sich eine einzige, gegebenenfalls mehrteilige Walze befindet, deren Drehachse sich unter dem Streichblech bzw. unter der Pflugschar befindet und welche quer zur Bewegung des Erdbalkens ausgerichtet ist, wobei die Walze die Oberfläche des Streichblechs bzw. der Pflugschar überragt.

Dabei ist wenigstens eine drehbare Walze vorgesehen, welche das Streichblech durchsetzt, wobei die Walze ein Oberflächenprofil aufweist, welches der einem zu wendenden und zu krümelnden Erdbalken zugewandten Seite des Streichblechs im Wesentlichen entspricht. Dadurch, dass wenigstens eine drehbare Walze vorgesehen ist, welche das Streichblech durchsetzt, gelingt es einerseits, die bekannten Vorteile des Streichblechs vollständig auszunützen, nämlich ein gutes Wenden und Krümeln des Erdbalkens vorzunehmen. Andererseits wird der für das Pflügen erforderliche Energieaufwand durch die wenigstens eine das Streichblech durchsetzenden drehbaren Walze deutlich verringert, da aufgrund der bedeutend geringeren Rollreibungskoeffizienten gegenüber dem Reibungskoeffizienten auf einem starren Element, bei welchem im Wesentlichen Gleit- und Haftreibung auftreten, der erforderliche Energieaufwand herabgesetzt ist.

Da Scherkräfte, Reibungswinkel und die Geometrie des Streichblechs neben dem Reibungskoeffizienten weitere Einflussfaktoren sind, welche zum gesamten Energieverbrauch beitragen, ist es aufgrund der Beibehaltung der in langjährigen Tests optimierten und erprobten Geometrie eines Streichblechs möglich, den gesamten Energieaufwand gegenüber herkömmlichen Pflügen deutlich, d.h. mindestens um etwa 15 %, herabzusetzen, ohne wesentliche Änderungen an einem Pflug vornehmen zu müssen. Mit einer derartigen Konstruktion des Pflugs gelingt überdies eine feinere Krümelung des Erdbalkens, wodurch die Nachbearbeitung reduziert werden kann.

Da gemäß einer Weiterbildung der gegenständlichen Erfindung der Pflug so ausgebildet ist, dass mehrere, insbesondere drei Walzen das Streichblech durchsetzend angeordnet sind, wird im Wesentlichen auf der Oberfläche des Streichblechs ein Förderbandeffekt erzielt, mit welchem die Gesamtreibung auf der Oberfläche des Streichblechs noch weiter herabgesetzt werden kann und somit der Energieaufwand weiter herabgesetzt wird.

Betreffend die Anzahl der einzusetzenden Walzen ist hierbei auf weitere Faktoren, wie die Bodenbeschaffenheit, die Größe des Pflugs, die Geometrie des Streichblechs, welches üblicherweise eine räumlich gekrümmte Arbeitsfläche aufweist, Rücksicht zu nehmen. Für die Erzielung einer maximalen Energieeinsparung werden die Walzen vorzugsweise exakt an diese Geometrie angepasst und fächerförmig, im Wesentlichen senkrecht zur Bewegung des Erdbalkens, in das Streichblech eingebaut.

Dadurch, dass in einem Streichblech eine Mehrzahl von Walzen vorgesehen ist, wird durch den Förderbandeffekt für den Erdbalken auch die Schubspannung in den Hauptbelastungszonen des Streichblechs herabgesetzt, sodass nicht nur der Verschleiß geringer wird, sondern der Pflug insgesamt leichtzügiger wird.

Um der räumlich gekrümmten Oberfläche des Streichblechs besonders gut Rechnung zu tragen, ist gemäß einer Weiterbildung der Erfindung der Pflug so ausgebildet, dass die Drehachse der Walzen mit einer Verbindungslinie zwischen Schar und Streichblech einen Winkel zwischen 20° und 160° einschließen. Wenn der Winkel, welcher die Drehachsen der Walzen mit der Verbindungslinie zwischen Schar und Streichblech einschließen, zwischen 20° und 160° gewählt ist, gelingt es, die Walzen unterschiedlich zur Horizontalen bzw. Vertikalen geneigt anzuordnen und insbesondere der räumlichen Krümmung des Streichblechs exakt folgend anzuordnen. Sofern die Walzen, insbesondere bei der Verwendung von mehr als zwei Walzen, zur Verbindungslinie zwischen Schar und Streichblech jeweils unterschiedlich geneigt angeordnet sind, wird der räumlichen Krümmung besonders gut gefolgt, wodurch die Reibung des Erdbalkens auf dem Streitblech deshalb weiter minimiert wird, da im Prinzip eine der räumlichen Krümmung des Streichblechs folgende Walzenfläche zur Verfügung gestellt wird.

Gemäß einer Weiterbildung der Erfindung ist weiterhin eine Walze im Bereich der Verbindungslinie zwischen der Schar und dem Streichblech die Schar durchsetzend angeordnet, wodurch insbesondere das Anheben bzw. das Hinaufschieben des Erdbalkens auf das Streichblech deshalb weiter erleichtert wird, da auch dort die üblicherweise bedeutend höhere Reibung aufgrund von Scherkräften, welche durch das Schieben des Erdbalkens über eine ebene Fläche auftritt, herabgesetzt wird.

Eine weitere Herabsetzung der gesamten erforderlichen Schleppzugkraft für den Pflug wird dadurch erreicht, dass auch im Vorschäler wenigstens eine Walze vorgesehen ist. Ein Vorschäler dient dazu, die oberste Erdschicht, in welcher sich vorallem Wurzeln, Ernterückstände u.dgl. befinden, vor dem eigentlichen Pflügen abzunehmen und seitlich abzuheben, wobei neben einer Schar auch ein kleiner dimensioniertes Streichblech vorgesehen ist. Eine derartige Maßnahme ist in gleicher Weise vorteilhaft wie die erfindungsgemäße Ausbildung des Pflugkörpers.

Um insbesondere der räumlichen Krümmung des Streichblechs gut folgen zu können, werden die Walzen an die Form des Streichblechs angepasst, was insbesondere dadurch gelingt, dass sie über ihre Länge einen unterschiedlichen Durchmesser aufweisen, welcher in Übereinstimmung mit den verschiedenen Radien an der Stelle der Anordnung der Walzen ermittelt wird und dass diese zudem im Streichblech etwa fächerförmig angeordnet sind, sofern mehrere Walzen vorgesehen sind.

Um diesen Gegebenheiten und insbesondere den unterschiedlichen Radien der Walze in ihrem Mittelbereich bzw. in ihrem Endbereich besser genügen zu können, wird gemäß einer Weiterbildung der Erfindung der Pflug so ausgebildet, dass für die Walzen X-förmige Ausnehmungen des Streichblechs und bzw. oder gegebenenfalls des Vorschälers vorgesehen sind. Diese X-förmigen Ausnehmungen brauchen nicht als symmetrische, X-förmige Ausnehmungen ausgebildet zu sein. Vielmehr kann beispielsweise der Bereich des geringsten Radius einer derartigen Walze mehr zu einem der freien Enden der Walze hin verschoben sein, wobei beispielsweise der Mittelbereich ein größerer abgeflachter Bereich ist und die Ausnehmung als unsymmetrisches X ausgebildet ist, aber sich gegebenenfalls im Extremfall auch einem V annähern kann.

Um einen sicheren Weitertransport des Erdbalkens zu gewährleisten, ist die Erfindung dahingehend weitergebildet, dass die Walzen über die mit dem Erdbalken in Kontakt stehende Fläche des Streichblechs und bzw. oder des Vorschälers und bzw. oder der Schar vorragend, insbesondere wenigstens in ihren freien Endbereichen vorragend, angeordnet sind. Sofern die Walzen derart in das Streichblech eingesetzt sind, dass sie auf diejenige Seite, welche mit dem Erdbalken in Kontakt ist, über die Oberfläche des Streichblechs, der Pflugschar bzw. auch des Vorschälers vorragend angeordnet sind, wird sichergestellt, dass die Walzen durch den Erdbalken in Rotation versetzt werden, wodurch die Reibungskräfte unmittelbar abgesenkt werden können.

Um zu verhindern, dass während eines Pflügens Steine, Holzstücke u.dgl. in einem Spalt zwischen den Walzen und den entsprechenden Ausnehmungen des Streichblechs und bzw. oder des Vorschälers und bzw. oder der Schar eingeklemmt werden, ist die Erfindung vorzugsweise so weitergebildet, dass wenigstens eine Längskante der Ausnehmungen des Streichblechs und bzw. oder der Schar und bzw. oder des Vorschälers, insbesondere jene einer Bewegungsrichtung des Erdbalkens vorlaufende Längskante der Ausnehmungen, mit sich in Richtung zur Oberfläche verringernder Dicke ausgebildet ist. Mit einer derartigen Ausbildung gelingt es, die Längskanten der Ausnehmungen so weit wie möglich an die Walzen heranzuführen und dadurch den Spalt zwischen der bzw. den Ausnehmungen und den Walzen möglichst gering zu halten.

Um nicht nur das Einklemmen von harten Gegenständen zwischen den Walzen und dem Spalt zu vermeiden, sondern auch sicherzustellen, dass eine derartige Längskante mit sich verringernder Dicke nicht ausgeschlagen wird, ist die Erfindung so weitergebildet, dass an dem bzw. den Bereichen verringerter Dicke eine rückstellfähige, insbesondere aus Kunststoff hergestellte, einen Spalt zwischen einer Ausnehmung und der diese durchsetzenden Walze überdeckende Lasche lösbar vorgesehen ist. Dadurch, dass eine Lasche lösbar, insbesondere von der Rückseite eines Spalts zwischen der Ausnehmung und der diese Ausnehmung durchsetzenden Walze diesen Spalt überdeckend, vorgesehen ist, gelingt es einerseits, an einer dem Erdbalken zugewandten Seite beispielsweise des Streichblechs eine durchgehende Oberfläche zur Verfügung zu haben, in welcher weder die Kante des Streichblechs ausgeschlagen werden kann, noch harte Gegenstände, wie Steine, Äste od.dgl., eingeklemmt werden können, wodurch sowohl beispielsweise das Streichblech als auch die dieses durchsetzende Walze vor Beschädigungen geschützt sind.

Für eine weitere Verringerung der Reibungskräfte auf dem Pflug und somit eine Erhöhung der Energieeinsparung ist die Erfindung dahingehend weitergebildet, dass in und bzw. oder in Verlängerung der Anlage, insbesondere in der Schleifsohle der Anlage, eine Rolle, insbesondere eine mitlaufende Radrolle, vorgesehen ist. Die Anlage, ihre Verlängerung und insbesondere die Schleifsohle der Anlage, welche in Kontakt mit derjenigen Seite der Furche eines Felds steht, welche von der Innenseite des Streichblechs abgewandt ist und welche insbesondere die Stützkräfte des Pflugs aufnimmt, kurz Furchenwand genannt, ist nicht unerheblichen Reibungskräften ausgesetzt, da die Anlage im Wesentlichen unter einem Winkel von etwa 90° zur Oberfläche eines Felds oder einer Wiese mitgezogen wird. Auf diese Weise wird sie nicht nur sehr stark beansprucht, sondern es wirkt ein nicht unerheblicher Teil der Gesamtreibungskräfte auf die Schleifsohle der Anlage.

Wenn in dieser Schleifsohle der Anlage bzw. in Verlängerung der Anlage eine Rolle bzw. Walze oder auch ein Rad vorgesehen ist, gelingt es, auch die Reibungskräfte an der Schleifsohle deutlich herabzusetzen, sodass vom Schlepper geringere Kräfte aufgenommen werden müssen, wodurch nicht nur eine Verringerung der Reibungskräfte sondern auch eine Zugpunktverbesserung erzielt wird.

Besonders günstige und gute Reibungswerte werden gemäß der Erfindung dadurch erzielt, wenn gemäß einer Weiterbildung der Erfindung die Walzen als Stahlwalzen mit einer Verschleißschicht aus einem gummielastischen Material oder Polyurethan mit einer Härte zwischen 25 und 75 Shore ausgebildet sind. Derartige Walzen weisen nicht nur eine hohe Standzeit auf, sondern sie sind überdies auch ausreichend glatt, um an ihrer Oberfläche Reibungen weitgehend zu vermeiden. Sie gewährleisten zudem extrem hohe mechanische Belastbarkeit und lange Standzeiten. Derartige Walzen, insbesondere die Verschleißschicht der Walzen, können auch mit Längsrillen od.dgl. ausgebildet sein, um die gesamte Reibungsfläche weiter herabzusetzen, wobei die exakte Geometrie der Oberfläche bzw. der Walzen von dem zu bearbeitenden Erdboden, der zu erwartenden Rollreibung und dem zu erwartenden Verschleiß der Oberfläche abhängig ist.

Besonders gute Ergebnisse werden gemäß der Erfindung mit Walzen erzielt, welche beispielsweise kugelgelagert sind und welche gegen Verschmutzung gekapselt sind, sowie welche weiters einen Stahlkern aufweisen, um dadurch besonders leichtlaufend zu sein und die Reibung weiter herabzusetzen. Zudem können die Walzen auch aus Walzen mit Walzenkernen aus einem anderen Material, wie z.B. aus Aluminium, dessen Legierungen, Glasfaserverbundwerkstoffen, Kunststoffkernen, Spritzgusskernen, Karbonsandwichsystem od.dgl. hergestellt sein.

Um den Verschleiß der Walzen, insbesondere ihrer Endbereiche, möglichst zu minimieren, ist gemäß einer Weiterbildung der Erfindung der Pflugkörper so ausgebildet, dass Endbereiche der Walzen abgerundet ausgebildet sind. Durch eine abgerundete Ausbildung von Endbereichen wird ein Ausschlagen bzw. Ausreißen der Verschleißschicht mit Sicherheit vermieden und wird zudem eine besonders ruhige und gleichlaufende Walze zur Verfügung gestellt.

Sofern, wie dies einer Weiterbildung der Erfindung entspricht, der Pflug so ausgebildet ist, dass die Verschleißschicht der Walzen eine über eine Länge der Walzen unterschiedliche, an die Kontur des Streichblechs und bzw. oder des Vorschälers angepasste Dicke aufweist, gelingt es auf einem zylindrischen Walzengrundkörper jedes beliebige Profil der Walze auszubilden, um insbesondere dem Verlauf des Streichblechs möglichst exakt zu folgen und somit ein glattes Überstreichen bzw. einen Förderbandeffekt zu erzielen und somit das Wenden und das Krümeln des Erdbalkens über das Streichblech zu gewährleisten.

Besonders gute Ergebnisse werden gemäß der Erfindung mit einem Pflug erzielt, welcher, wie dies einer Weiterbildung der Erfindung entspricht, so ausgebildet ist, dass die Walzen als auf der Rückseite des Streichblechs, der Anlage und bzw. oder dem Vorschäler befestigte Profilwalzen mit Lager und Lagerbock oder kardanisch aufgehängt ausgebildet sind. Sofern die Walzen auf der Rückseite des Streichblechs, des Vorschälers oder der Anlage angeordnet sind und beispielsweise mit Lager und Lagerbock ausgebildet sind, gelingt einerseits eine exakte Höhenanpassung der Walzen an das jeweilige Profil des Streichblechs oder anderer mit Walzen zu versehender Bauteile, wie beispielsweise der Schar, und können andererseits derartige Walzen leicht und ohne jedes Problem, beispielsweise nach einem Verschleiß der Verschleißschicht, getauscht werden, ohne dass der gesamte Pflugkörper zerlegt werden muss. Eine Befestigung und Justierung ist auch über Stellschrauben und Schraubspindeln oder eine kardanisch aufgehängte Walze möglich und erbringt vorteilhafte Ergebnisse. Zur Feinjustierung und Anpassung an verschiedene Bodenverhältnisse können weiterhin z.B. Distanzplatten vorgesehen werden.

Insgesamt ist festzuhalten, dass ein Pflug gemäß der Erfindung gegenüber herkömmlichen Pflügen nur eine geringe Anzahl von robusten und wenig verschleißanfälligen Zusatzteilen aufweist, wodurch einerseits die Herstellungskosten gering sind und andererseits nicht nur die Nachrüstung von bestehenden Pflügen leicht und problemlos möglich ist, sondern insbesondere ein sicheres und zuverlässiges, an unterschiedlichste Bedingungen der Bodenbearbeitung anpassbares System erreicht wird, mit welchem gegenüber herkömmlichen Pflügen Energieeinsparungen im Bereich von 15 % bis 35 % möglich sind.

Der Gegenstand der Erfindung ist nachstehend anhand von in der Zeichnung gezeigten Ausführungsbeispielen näher erläutert. Es zeigen:
- FIG.1: eine Pflugschar mit einem Streichblech sowie einem Vorschäler gemäß dem Stand der Technik,
- FIG.2: eine Pflugschar mit einem Streichblech gemäß der Erfindung,
- FIG.3: eine Detailansicht eines Streichblechs mit zwei Walzen,
- FIG.4: eine Detailansicht eines Streichbleches mit darin angeordneten Walzen, in Ansicht von hinten,
- FIG.5: die Ausbildung einer Anlage mit Schleifsohle sowie einem mitlaufenden Rad, und
- FIG.6: ein Diagramm, in welchem die jeweils erforderliche Kraft beim Pflügen, mit und ohne Einsatz von Walzen im Streichblech dargestellt ist.

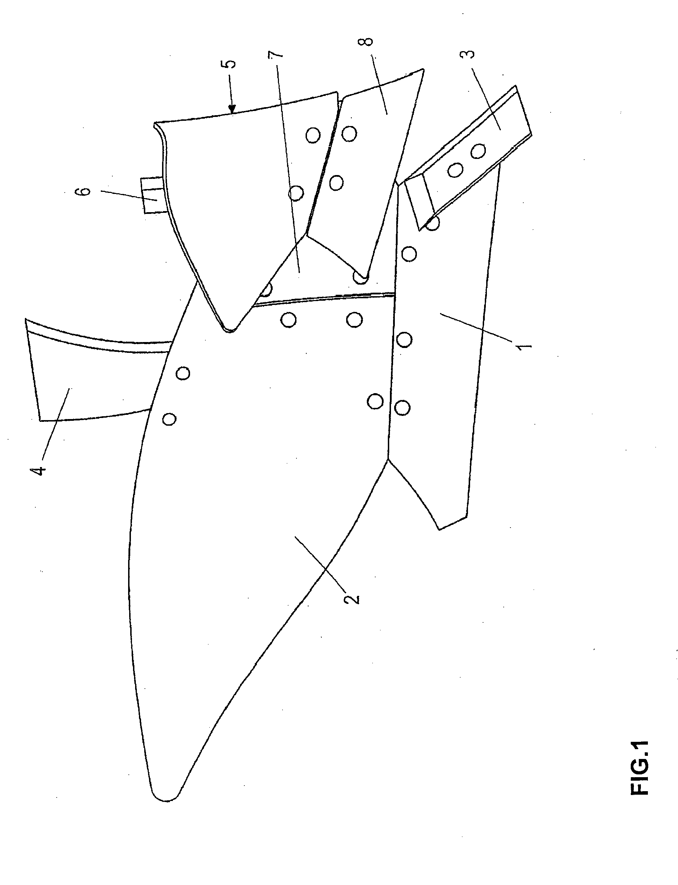

In FIG.1 ist ein Teil eines Pflugs dargestellt, welcher Teil eine Pflugschar 1 mit daran angeordnetem Streichblech 2 sowie einem Meißel 3 aufweist. Das Streichblech 2, die Pflugschar 1 und der Meißel 3 sind hierbei in herkömmlicher Weise an einem Tragkörper befestigt. Über ein seitliches Pfluggrindel 4 erfolgt die Befestigung des Tragkörpers an einem Pflugrahmen. Hierbei ist ein Überlastschutz vorgesehen. An demselben Pflugrahmen ist über ein Vorschälergrindel 6 ein in FIG.1 ebenfalls dargestellter Vorschäler 5 befestigt.

Der Vorschäler 5 besteht hierbei wiederum aus einem Streichblech 7 und einer Schar 8, welche im Vergleich zur Schar 1 sowohl eine geringere Längserstreckung als auch eine geringere Eindringtiefe aufweist und welche insbesondere dazu dient, die Bodenoberfläche aufzulockern, um ein späteres Einarbeiten des Wurzelwerks besser zu ermöglichen.

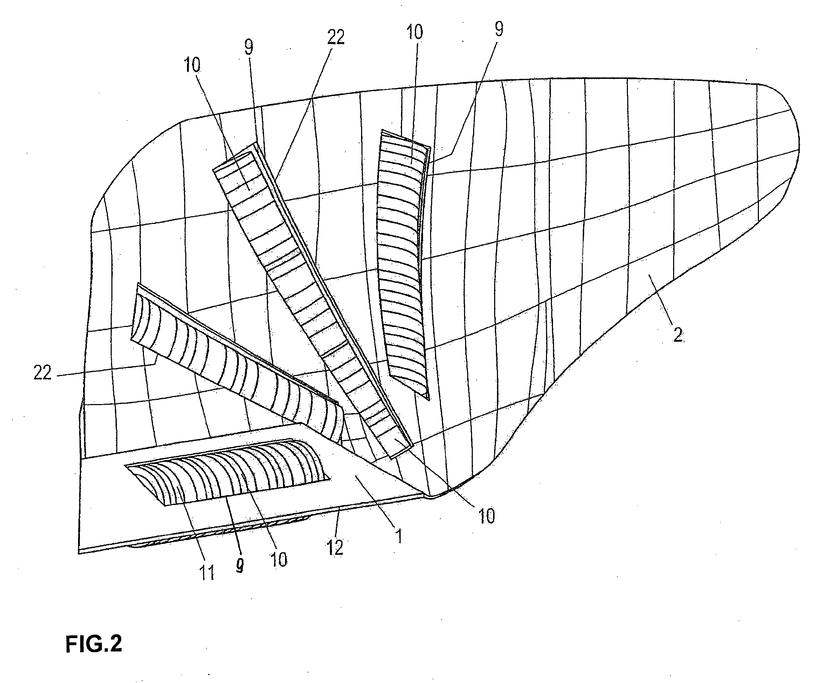

In FIG.2 ist eine erfindungsgemäße Ausbildung eines Streichblechs 2 sowie einer Pflugschar 1 gezeigt, wobei sowohl das Streichblech 2 als auch die Pflugschar 1 Durchbrechungen 9 aufweisen. Von der Rückseite des Streichblechs 2 ebenso wie von der Pflugschar 1 sind in diese Durchbrechungen 9 Walzen 10 so eingesetzt, dass sie die das Streichblech 2 ebenso wie der Pflugschar 1 durchdringen. Die Walzen 10 sind hierbei so in die Durchbrechungen 9 eingesetzt, dass ihre Verschleißschicht 11 zumindest teilweise über die Oberfläche der Schar 1 als auch jene des Streichblechs 2 vorragend ausgebildet ist, um einen sicheren Weitertransport eines durch die Schar 1 ausgehobenen Erdbalkens, welcher in der Figur nicht dargestellt ist, über die Schar 1 und das Streichblech 2 zu gewährleisten.

Die Walzen sind in FIG.2 so angeordnet, dass die in der Pflugschar 1 vorgesehene Walze 10 parallel zur Schneidkante 12 der Pflugschar 1 angeordnet ist. Diese Walze 10 weist hierbei einen über ihre gesamte Längserstreckung gleichbleibenden Durchmesser auf. Die im Streichblech 2 angeordneten Walzen 10 schließen mit der Verbindungslinie der Pflugschar 1 mit dem Streichblech 2 einen Winkel ein, wobei die Walzen 10 so in das Streichblech 2 eingesetzt sind, dass sie im Wesentlichen der räumlich gekrümmten Oberfläche, welche in FIG.2 durch den auf dem Streichblech 2 dargestellten Raster angedeutet ist, folgen. Zwischen den Walzen 10 und den Rändern der Durchbrechungen 9 befinden sich Spalten 22.

Da die Walzen 10 so angeordnet sind, dass sie der räumlich gekrümmten Oberfläche des Streichblechs 2 folgen, wird ein sicherer und störungsfreier Weitertransport eines Erdbalkens gewährleistet. Da die Walzen 10 frei drehbar von der Rückseite des Streichblechs 2 bzw. der Schar 1 angeordnet sind, kann die erforderliche Kraft für den Weitertransport des Erdbalkens deutlich herabgesetzt werden, wodurch diese im Vergleich zu herkömmlichen Ausbildungen von Pflug, Schar 1 und Streichblech 2 um bis zu 35 % herabgesetzt wird, wie dies nachfoglend erläutert ist.

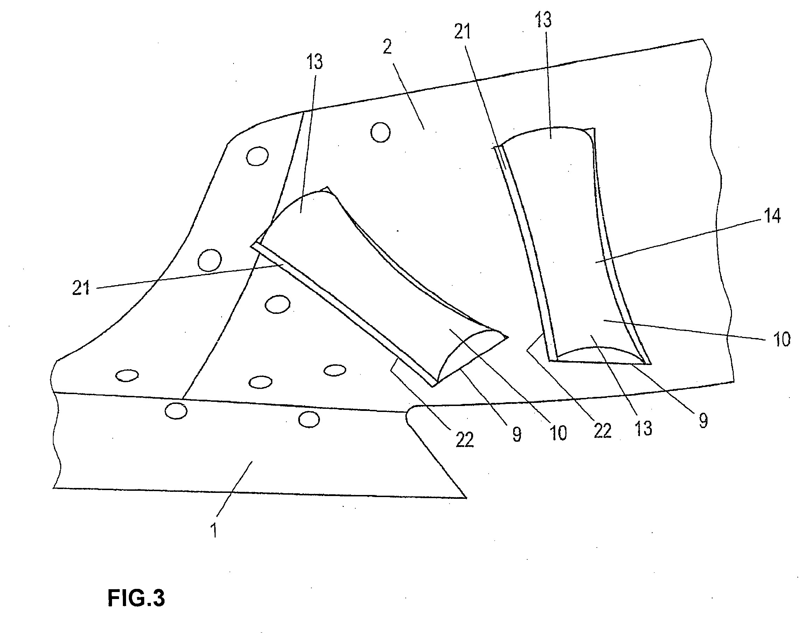

In FIG.3 ist eine Teilansicht einer anderen Variante eines Streichblechs 2 samt Pflugschar 1 dargestellt. Dabei weist die Pflugschar 1 keine durchdringende Walze 10 auf und sind im Streichblech 2 lediglich zwei Walzen 10, die das Streichblech 2 durchdringen, von der Rückseite des Streichblechs 2 her angeordnet. Die Ausnehmungen 9 für die Walzen 10 sind im Wesentlichen X-förmig ausgebildet. Die Walzen 10 weisen insbesondere in ihren Endbereichen 13 einen größeren Durchmesser als in ihrem Mittelbereich 14 auf.
Wie dies aus FIG.3 gut ersichtlich ist, sind die Walzen 10 hierbei weiterhin so von der Rückseite des Streichblechs 2 und das Streichblech 2 derart durchdringend eingesetzt, dass sie in ihren Endbereichen 13 weiter über die Oberfläche des Streichblechs 2 vorragen, als in ihrem Mittelbereich 14, um insbesondere ein möglichst glattes Weitertransportieren eines Erdbalkens zu ermöglichen und somit den Kraftaufwand bzw. Energieaufwand weitgehend zu minimieren. Weiterhin sind jeweils von der Rückseite des Streichblechs 2 her Laschen 21, insbesondere flexible bzw. rückstellfähige Laschen 21, vorgesehen, um den Spalt 22 zwischen dem Streichblech 2 und den Walzen 10 so gering wie möglich zu halten.

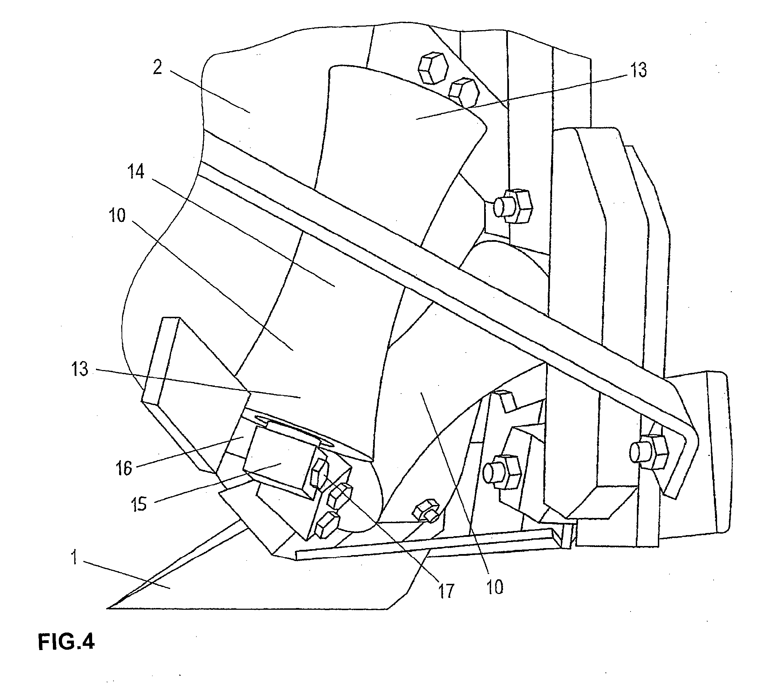

In FIG.4 ist ein Detail eines Pflugkörpers bzw. eines Pfluges gemäß der Erfindung dargestellt, wobei in diesem Detail insbesondere die Anordnung der Walzen 10 auf der Rückseite eines Streichblechs 2 ersichtlich ist. Elemente, welche für das Funktionieren des erfindungsgemäßen Pflugs nicht erforderlich sind, wie beispielsweise die in FIG.4 dargestellten Streben, sind nicht näher erläutert.

Die Walzen 10, welche am Streichblech 2 befestigt sind, sind, wie dies erkenntlich ist, mittels eines Lagerbocks 15, Distanzstücken 16 und Feststellschrauben 17 an der Rückseite des Streichblechs 2 befestigt. Wie dies aus FIG.4 gut ersichtlich ist, weisen die Walzen 10 im Wesentlichen einen über die Länge der Walze 10 sich ändernden Durchmesser auf. So sind die Walzen 10 in ihren Endbereichen 13 mit einem größeren Durchmesser ausgebildet als in ihrem Mittelbereich 14, wodurch sie, wie dies zuvor festgehalten wurde, in ihren Endbereichen 13 weiter über die Oberfläche des Streichblechs 2 als in ihrem Mittelbereich 14 vorragen. In diesem Zusammenhang ist weiterhin festzuhalten, dass der Bereich des geringsten Durchmessers der Walze 10 nicht unbedingt in der Mitte der Längserstreckung der Walze 10 angeordnet sein muss, sondern zu einer Seite hin verschoben sein kann, je nachdem wie dies die Geometrie des Streichblechs 2 erfordert. In der Pflugschar 1 ist in FIG.4 keine Walze 10 angeordnet.

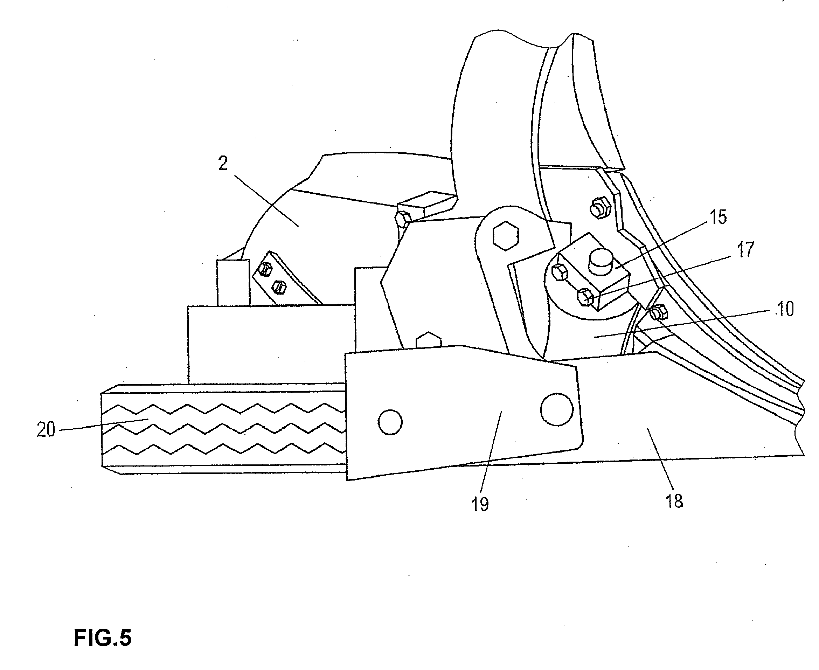

In FIG.5 ist die erfindungsgemäße Ausbildung eines Pflugkörpers mit Streichblech 2 in Ansicht von hinten dargestellt.
In das Streichblech 2 ist lediglich eine Walze 10, welche das Streichblech 2 von hinten durchdringt, eingesetzt, wobei die Befestigung der Walze 10 mittels eines Lagerbocks 15 mit Distanzstücken 16 und Feststellschrauben 17 gut ersichtlich ist. An der Rückseite des Streichblechs 2 ist hierbei eine Anlage 18 ausgebildet, an welcher eine Schleifsohle 19 angeordnet ist. Die Schleifsohle 19 ist hierbei verkürzt ausgebildet, um die Reibungskräfte der Anlage 18 so weit als möglich zu minimieren. Anstelle der Ausbildung der Schleifsohle 19 über die volle Länge der Anlage 18 ist weiters in FIG. 5 ein Rad 20 als umlaufendes Element dargestellt, welches die Reibungskräfte auf die Anlage 18 dahingehend minimiert, dass die Anlage 18 nicht entlang ihrer gesamten Länge am Rand des umgepflügten Felds schleift, sondern mit dem Rad 20 am Feldrand entlang laufen kann.

Anstelle des Rades 20 könnte beispielsweise an der Schleifsohle 19 auch eine Art umlaufendes Band angeordnet sein, um die Reibungskräfte zu vermindern, wobei auch ein derartiges umlaufendes Band über die Oberfläche der Schleifsohle 19 vorragend ausgebildet sein muss, um die Rollreibung im Vergleich zur Schleifreibung zur Wirkung zu bringen.

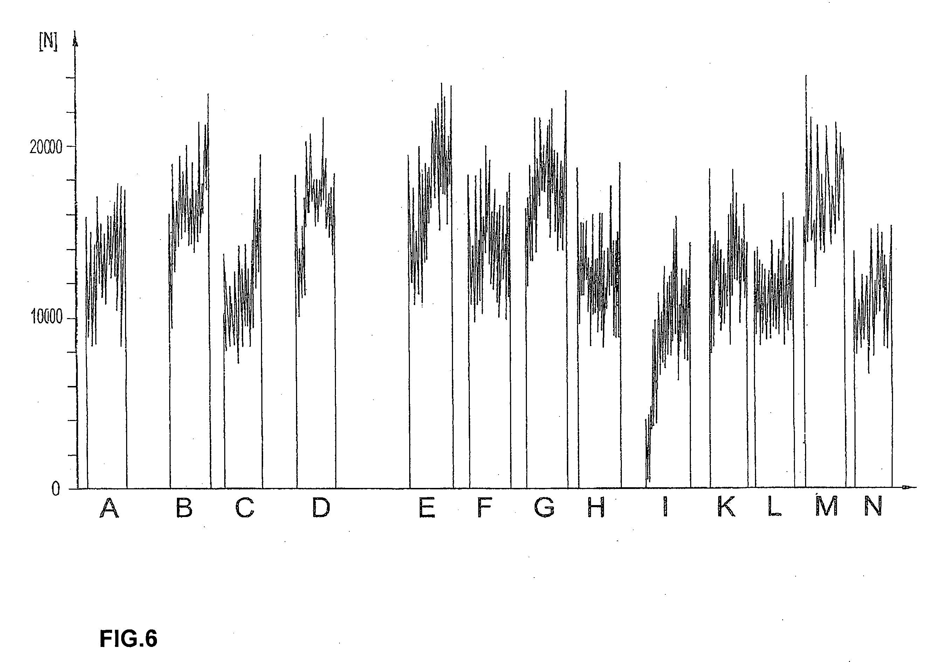

In FIG.6 ist schließlich ein Diagramm dargestellt, welches die auf einen gemäß der Erfindung ausgebildeten Pflug aufgebrachten Kräfte darstellt. Die erforderliche Zugkraft wurde mittels einer am Pfluganbau aufgebrachten Zugkraftmesseinrichtung (Pflugwaage) ermittelt. In diesem Diagramm sind die Ergebnisse einer Mehrzahl von Messungen dargestellt, wobei jede Messung, die während des Pflügens einer Furche mit der Länge von 100 m gemessenen Zugkräfte am Pflug widergibt bzw. darstellt.

Hierbei wurden Pflugelemente, nämlich Pflugschare und Streichbleche, mit unterschiedlichen Anzahlen von Walzen zum Einsatz gebracht und zum Vergleich auch solche Pflugelemente, welche nicht mit Walzen ausgebildet waren.

In FIG.6 stellt A die gemessene Zugkraft in einer Furche dar, welche mit einer Pflugschar gemäß der Erfindung ausgeführt wurde, in welche nur eine Walze 10 eingesetzt war.
B ist der Zugkraftbedarf in der benachbarten Ackerfurche, welche mit einem Pflug gemäß dem Stand der Technik ohne irgendwelche Walzen ausgeführt wurde.
Die Ackerfurche C wurde mit einem Pflug, welcher zwei Walzen 10 im Streichblech 2 aufweist, durchgeführt.
Die Ackerfurche D wurde mit einem Pflug ohne in das Streichblech 2 eingesetzte Walzen 10 durchgeführt.
Desgleichen sind die Ackerfurchen E, G und M mit herkömmlichen Pflügen durchgeführt worden.

Die Furchen F und H wurden jeweils mit einem Pflug ausgeführt, in welchem eine Walze 10 in das Streichblech 2 eingesetzt war und eine Walze 10 in den Verbindungsbereich zwischen Schar 1 und Streichblech 2 eingesetzt war. Aus der in diesen Furchen aufzuwendenden Zugkraft ist ersichtlich, dass bei Anordnung von nur einer Walze 10 im Streichblech 2 und einer Walze 10 in der Pflugschar 1 keine besseren Ergebnisse als bei Anordnung einer einzelnen Walze 10 im Streichblech 2 erzielt werden. Daraus lässt sich herleiten, dass die Anordnung von Walzen 10 im Streichblech 2 eine größere Wirkung und für das Funktionieren der Erfindung eine größere Effizienz als die Anordnung einer Walze 10 in der Pflugschar 1 mit sich bringt.

Die Ackerfurchen I, K, L und N wurden jeweils mit drei Walzen im Streichblech durchgeführt, wobei in der Ackerfurche N eine weitere Walze 10 im Übergangsbereich zwischen Pflugschar 1 und Streichblech 2 angeordnet war und in der Ackerfurche I zusätzlich ein Rad 20 in die Anlage 18 eingebaut war.

Aus FIG.6 ist ersichtlich, dass ein herkömmlicher Pflug ohne den Einsatz der erfindungsgemäßen Walzen 10 üblicherweise auf dem Testfeld eine Zugkraft von etwa durchschnittlich 17000 bis 18000 N für das Pflügen benötigte. Bei Einsatz von einem Streichblech mit drei Walzen 10, wie dies dem Diagramm K entspricht, konnte diese erforderliche Zugkraft auf etwa 13000 N abgesenkt werden und die Kraft konnte weiterhin auf etwa 11000 N abgesenkt werden, wenn zusätzlich noch ein Rad 20 in der Anlage 18 vorgesehen war bzw. eine weitere Walze 10 im Übergangsbereich zwischen Schar 1 und Streichblech 2 vorgesehen war, wie dies den Ackerfurchen I und N entnehmbar ist.

Wie aus diesen Diagrammen erkannt werden kann, ist es somit durch Einsatz eines erfindungsgemäßen Pflugkörpers bzw. Pfluges möglich, Zugkrafteinsparungen zwischen 25 % bis etwa 40 % zu erzielen, welche unmittelbar auf den Kraftstoffverbrauch des Zugfahrzeugs, eines Traktors bzw. eines Schleppers umgelegt werden können, wodurch eine extrem kosteneffiziente und einfache Art des Pflügens zur Verfügung gestellt werden kann.

Schließlich ist festzuhalten, dass mit einer derartigen Einrichtung nicht nur eine erhebliche Kraft- bzw. Energieeinsparung verbunden ist, sondern insbesondere auch der Verschleiß der Bauteile deutlich herabgesetzt werden kann.

## Patentansprüche

1. Pflugkörper mit einer Pflugschar (1) und mit einem an diese anschließenden Streichblech (2), über welches der von der Pflugschar (1) angehobene Erdbalken bewegt wird, **dadurch gekennzeichnet, dass** das Streichblech (2) und bzw. oder die Pflugschar (1) mit mindestens einer Durchbrechung (9) ausgebildet sind bzw. ist, in welcher sich eine einzige, gegebenenfalls mehrteilige Walze (10) befindet, deren Drehachse sich unter dem Streichblech (2) bzw. unter der Pflugschar (1) befindet und welche quer zur Bewegung des Erdbalkens ausgerichtet ist, wobei die Walze (10) die Oberfläche des Streichblechs (2) bzw. der Pflugschar (1) überragt.

2. Pflugkörper nach Patentanspruch 1, **dadurch gekennzeichnet, dass** das Streichblech (2) und die Pflugschar (1) mit mindestens einer Durchbrechung (9) ausgebildet sind, in welcher sich eine einzige, gegebenenfalls mehrteilige Walze (10) befindet, deren Drehachse sich unter dem Streichblech (2) bzw. unter der Pflugschar (1) befindet, welche quer zur Bewegung des Erdbalkens ausgerichtet ist, wobei die Walze (10) die Oberfläche des Streichblechs (2) bzw. der Pflugschar (1) überragt.

3. Pflugkörper nach Patentanspruch 1, **dadurch gekennzeichnet, dass** das Streichblech (2) mit mindestens einer Durchbrechung (9) ausgebildet ist, in welcher sich eine einzige, gegebenenfalls mehrteilige Walze (10) befindet, deren Drehachse sich unter dem Streichblech (2) befindet, welche quer zur Bewegung des Erdbalkens ausgerichtet ist, wobei die Walze (10) die Oberfläche des Streichblechs (2) überragt.

4. Pflugkörper nach Patentanspruch 1, **dadurch gekennzeichnet, dass** die Pflugschar (1) mit mindestens einer Durchbrechung (9) ausgebildet ist, in welcher sich eine einzige, gegebenenfalls mehrteilige Walze (10) befindet, deren Drehachse sich unter der Pflugschar (1) befindet, welche quer zur Bewegung des Erdbalkens ausgerichtet ist, wobei die Walze (10) die Oberfläche der Pflugschar (1) überragt.

5. Pflugkörper nach einem der Patentansprüche 1 bis 4, **dadurch gekennzeichnet, dass** das Streichblech (2) mit mindestens zwei Durchbrechungen, in welchen sich jeweils eine einzige Walze befindet, ausgebildet ist, zwischen welchen sich Bereiche des Streichbleches befinden, über welche der Erdbalken bewegt wird.

6. Pflugkörper nach einem der Patentansprüche 1 bis 5, **dadurch gekennzeichnet, dass** die Drehachse der in der mindestens einen Durchbrechung (9) befindlichen Walze (10) mit der Bewegungsrichtung des Erdbalkens einen Winkel von angenähert 90° einschließt.

7. Pflugkörper nach einem der Patentansprüche 1 bis 6, **dadurch gekennzeichnet, dass** die in der mindestens einen Durchbrechung (9) befindlichen Walze (10) eine an den Verlauf des Streichblechs (2) bzw. der Pflugschar (1) im Bereich der Durchbrechung (9) angepasste Oberfläche aufweist.

8. Pflugkörper nach einem der Patentansprüche 1 bis 7, **dadurch gekennzeichnet, dass** die in der mindestens einen Durchbrechung (9) befindliche Walze (10) über ihre Länge doppelkonusförmig ausgebildet ist.

9. Pflugkörper nach einem der Patentansprüche 1 bis 8, **dadurch gekennzeichnet, dass** in mindestens einen der Spalte (22), welche zwischen den Längskanten der mindestens einen Durchbrechung (9) und der in dieser befindlichen Walze (10) bestehen, eine vorzugsweise aus einem Kunststoff bestehende Lasche (21) eingesetzt ist.

10. Pflugkörper nach einem der Patentansprüche 1 bis 9, **dadurch gekennzeichnet, dass** die in der mindestens einen Durchbrechung (9) befindliche Walze (10) aus Metall, insbesondere aus Stahl, hergestellt und mit einer Verschleißschicht (11) aus einem gummielastischen Material, wie Polyurethan mit einer Härte zwischen 25 und 75 Shore, ausgebildet ist.

11. Pflugkörper nach Patentanspruch 10, **dadurch gekennzeichnet, dass** die Verschleißschicht (11) eine über eine Länge der Walze (10) unterschiedliche, an die Kontur des Streichblechs (2) bzw. der Pflugschar (1) angepasste Dicke aufweist.

12. Pflugkörper nach einem der Patentansprüche 1 bis 11, **dadurch gekennzeichnet, dass** Endbereiche der in der mindestens einen Durchbrechung (9) befindlichen Walze (10) abgerundet ausgebildet sind.

13. Pflugkörper nach einem der Patentansprüche 1 bis 12, **dadurch gekennzeichnet, dass** er mit einer Anlage (18) ausgebildet ist.

14. Pflugkörper nach Patentanspruch 13, **dadurch gekennzeichnet, dass** die Anlage (18) mit einem umlaufenden Band ausgebildet ist.

15. Pflugkörper nach einem der Patentansprüche 1 bis 14, **dadurch gekennzeichnet, dass** die in der mindestens einen Durchbrechung (9) befindlichen Walze (10) auf der Rückseite des Streichblechs (2) bzw. der Anlage (18) bzw. der Pflugschar (1) gelagert oder kardanisch aufgehängt ist.

16. Pflugkörper nach einem der Patentansprüche 9 bis 15, **dadurch gekennzeichnet, dass** die Lasche (21) in den in Bewegungsrichtung des Erdbalkens hinteren Spalt (22) eingesetzt ist.

17. Pflug mit einem Pflugrahmen, an welchem ein Pflugkörper (1, 2) nach einem der Patentansprüche 1 bis 16 befestigt ist.

18. Pflug nach Patentanspruch 17, **dadurch gekennzeichnet, dass** am Pflugrahmen zudem ein Vorschäler (5) befestigt ist, welcher gleichfalls mit mindestens einer Durchbrechung ausgebildet ist, in welcher sich eine einzige, gegebenenfalls mehrteilige Walze befindet.

19. Pflug nach einem der Patentansprüche 17 und 18, **dadurch gekennzeichnet, dass** der Pflugkörper (1, 2) mit einer Anlage (18) ausgebildet ist, in deren Verlängerung, insbesondere in Verlängerung einer Schleifsohle (19) der Anlage (18), ein mitlaufendes Rad (20) angeordnet ist.
